# FASCICULE DE BREVET EUROPEEN

(11) **EP 4 499 442 B1**
(45) Date de publication et mention de la délivrance du brevet: **31.12.2025**
(21) Numéro de dépôt: 23716646.7
(22) Date de dépôt: 21.03.2023
(51) Int. Cl.: B60L 15/20, B60L 1/00, B60K 17/02, B60K 17/12, F16H 3/72, F16H 37/10, B60K 1/00, F16H 1/16

(54) **VÉHICULE À MOTORISATION ÉLECTRIQUE ET PROCÉDÉ DE PILOTAGE D'UN TEL VÉHICULE**
KRAFTFAHRZEUG MIT ELEKTRISCHEM ANTRIEB UND VERFAHREN ZUM STEUERN DES KRAFTFAHRZEUGS
VEHICLE WITH ELECTRIC DRIVE AND CONTROL METHOD FOR SUCH VEHICLE

(30) Priorité: 25.03.2022 FR 2202704
(43) Date de publication de la demande: 05.02.2025
(73) Titulaire: Les Comptoirs d'Eole, 26160 La Begude-de-Mazenc (FR)
(72) Inventeur: CATIMEL, Michel, 26160 LA-BEGUDE-DE-MAZENC (FR)
(74) Mandataire: Germain Maureau
(86) Numéro de dépôt international: PCT/FR2023/050393
(87) Numéro de publication internationale: WO 2023/180664

(56) Documents cités:
- EP-A1- 3 517 346
- DE-A1- 102006 044 894
- FR-A1- 2 847 015
- FR-A1- 2 997 047
- US-A1- 2006 111 211

## Description

### Domaine technique de l'invention

La présente invention concerne le domaine des véhicules à motorisation électrique, comme les véhicules électriques pur et les véhicules hydrides.

L'invention concerne également un procédé de pilotage de tels véhicules à motorisation électrique.

### Etat de la technique

Un véhicule à motorisation électrique est, de manière générale, un véhicule comprenant un groupe motopropulseur comprenant une machine électrique couplée aux roues motrices du véhicule. Cette machine électrique (appelée également moteur électrique de puissance) est configurée pour permettre une transmission d'un couple mécanique vers les roues motrices afin de faire avancer le véhicule.

Généralement, une telle transmission est réalisée par l'intermédiaire d'une boite de vitesse comprenant un ou plusieurs éléments de réduction permettant au moteur de transmettre un couple suffisant aux roues motrices notamment lors de phases d'accélération ou de démarrage.

Ainsi, dans les véhicules à motorisation électrique existant, il est fréquent d'utiliser un réducteur de puissance constant permettant de multiplier le couple transmis par la machine électrique aux roues motrices. Par exemple, certains véhicules sont équipés d'un réducteur principal ayant un taux de réduction de 1/10 qui permet sur certaines phases de fonctionnement particulières, de multiplier par 10 le couple mécanique transmis aux roues motrices.

Toutefois, bien que ces dispositions permettent de fournir le couple suffisant aux roues motrices pour le démarrage ou les accélérations, elles nécessitent le fonctionnement de la machine électrique avec une vitesse de rotation importante. Ainsi, un paradoxe du fonctionnement des véhicules à motorisation électrique est qu'ils consomment davantage sur autoroute qu'en ville. L'autonomie kilométriques des véhicules à motorisation électriques s'en trouve donc réduite, alors que la machine électrique pourrait être adaptée pour faire rouler les roues motrices sans consommation exponentielle de l'énergie électrique fournie par la machine électrique. EP3517346 A1 et FR2847015 A1 divulguent également véhicule à motorisation électrique/ hybride respectivement; comprenant : des roues motrices ; un groupe motopropulseur incluant au moins un moteur de puissance électrique et un mécanisme de transmission de puissance entre ledit moteur de puissance et les roues motrices, le mécanisme de transmission de puissance comprenant un réducteur principal / un réducteur principal présentant une architecture de train épicycloïdal respectivement; interposé entre le moteur de puissance et les roues motrices; selon l'art de technique.

### Objet de l'invention

La présente invention a pour but de proposer une solution qui réponde à tout ou partie des problèmes précités.

Ce but est atteint grâce à la mise en œuvre d'un véhicule à motorisation électrique, comprenant :
- des roues motrices ;
- un groupe motopropulseur incluant au moins un moteur de puissance électrique et un mécanisme de transmission de puissance entre ledit moteur de puissance et les roues motrices, le mécanisme de transmission de puissance comprenant un réducteur principal interposé entre le moteur de puissance et les roues motrices ledit réducteur principal présentant une architecture de train épicycloïdal à au moins un étage, où chaque étage comprend :
   ∘ un porte-satellites ;
   ∘ un arbre planétaire central centré autour d'un axe de rotation de réduction ;
   ∘ un arbre planétaire périphérique entourant extérieurement l'arbre planétaire central, et étant coaxial à l'arbre planétaire central autour de l'axe de rotation de réduction ;
   ∘ au moins un engrenage satellite, disposé entre l'arbre planétaire central et l'arbre planétaire périphérique, s'engrenant avec l'arbre planétaire central et l'arbre planétaire périphérique, et étant configuré pour tourner autour de l'axe de rotation de réduction ;
- une pédale d'accélérateur;
- un mécanisme de régulation distinct du groupe motopropulseur, le mécanisme de régulation comprenant :
- un moteur de régulation électrique;
- un mécanisme réducteur irréversible interposé entre le moteur de régulation et le mécanisme de transmission de puissance, et agissant sur le mécanisme de transmission de puissance d'une manière permettant d'ajuster, en fonction de la vitesse de rotation du moteur de régulation, le taux de réduction du réducteur principal, pour moduler une vitesse de rotation du moteur de puissance afin d'ajuster la valeur du couple mécanique transmis par le mécanisme de transmission de puissance aux roues motrices, le mécanisme réducteur irréversible interdisant une transmission d'efforts mécaniques du moteur de régulation vers les roues motrices et interdisant une transmission d'efforts mécaniques du mécanisme de transmission de puissance vers le moteur de régulation ledit mécanisme réducteur irréversible étant un système à roue et vis sans fin dont la vis sans fin est couplée en rotation avec un arbre de sortie du moteur de régulation et dont la roue est couplée en rotation avec le porte-satellites d'un étage dudit au moins un étage du réducteur principal, une rotation de la roue entraînant en rotation ledit porte-satellites dans un sens permettant d'augmenter le taux de réduction global du mécanisme de transmission de puissance ;
- une unité de commande électronique assurant un pilotage du moteur de puissance et du moteur de régulation en fonction de lois de commande enregistrées dans une mémoire de l'unité de commande électronique, lesdites lois de commande étant au moins dépendantes d'une action sur la pédale d'accélérateur du véhicule à motorisation électrique.

Les dispositions précédemment décrites permettent de proposer un véhicule à motorisation électrique dans lequel un mécanisme réducteur irréversible est utilisé pour contrôler le couple du moteur de puissance. Le caractère irréversible du mécanisme réducteur irréversible permet d'isoler mécaniquement le moteur de régulation par rapport au groupe motopropulseur afin qu'aucune puissance délivrée par le moteur de puissance ne soit transmise au moteur de régulation et inversement.

Le véhicule à motorisation électrique peut en outre présenter une ou plusieurs des caractéristiques suivantes, prises seules ou en combinaison.

Selon un mode de réalisation, le moteur de régulation comprend un arbre de sortie, ledit arbre de sortie étant solidaire en rotation d'un élément du mécanisme réducteur irréversible.

Selon un mode de réalisation, le véhicule à motorisation électrique comprend au moins un système de stockage d'énergie électrique configuré pour alimenter en énergie électrique au moins un moteur électrique choisi parmi le moteur de puissance du groupe motopropulseur et le moteur de régulation.

Selon un mode de réalisation, le réducteur principal présente un taux de réduction global de 0,25 entre une entrée mécaniquement reliée à une sortie du moteur de puissance et une sortie mécaniquement reliée aux roues motrices. Selon un mode de réalisation, le réducteur principal comprend un seul étage, ledit étage présentant un taux de réduction égal à 0,25.

Selon un mode de réalisation, le réducteur principal du mécanisme de transmission de puissance comprend au moins deux étages montés en série.

Selon un mode de réalisation, le réducteur principal comprend des pignons libres inverseurs disposés entre chaque étage.

Selon un mode de réalisation, chaque étage présente un taux de réduction, ledit taux de réduction de chaque étage étant choisi de sorte qu'un taux de réduction global du réducteur principal soit compris entre 1/3 et 1/5.

Selon un mode de réalisation, le réducteur principal comprend trois étages montés en série où chaque étage présente un taux de réduction de 0,63, de sorte que le réducteur principal présente un taux de réduction global de 0,25.

Selon un mode de réalisation, la roue du système à roue et vis sans fin est solidaire en rotation avec le porte-satellites d'un étage de l'au moins un étage du réducteur principal.

Selon un mode de réalisation, la vis sans fin du système à roue et vis sans fin est solidaire en rotation de l'arbre de sortie du moteur de régulation.

Selon un mode de réalisation, le véhicule à motorisation électrique comprend un premier engrenage et un deuxième engrenage disposés entre la roue du système à roue et vis sans fin et le porte-satellite de l'un des étages du réducteur principal, lesdits premier et deuxième engrenages étant engrenés l'un avec l'autre, le premier engrenage étant en outre engrené avec la roue du système à roue et vis sans fin, et le deuxième engrenage étant solidaire en rotation du porte-satellites.

Selon un mode de réalisation, lesdits premier et deuxième engrenages sont montés en série entre la roue du système à roue et vis sans fin et un porte-satellites de l'un des étages du réducteur.

Selon un mode de réalisation, le système à roue et vis sans fin est configuré de sorte à présenter un taux de réduction compris entre 1/8 et 1/12.

Selon un mode de réalisation, le taux de réduction du système à roue et vis sans fin est égal à 1/10.

Selon un mode de réalisation, la vis sans fin comprend un filet ayant un angle de filet inférieur ou égal à 6°, et notamment sensiblement égal à 6°.

Ainsi, le système à roue et vis sans fin est réputé irréversible, la rotation de la roue solidaire en rotation du porte-satellites étant dépendante de la rotation de la vis sans fin. Ladite vis sans fin est configurée pour s'effacer, à la vitesse de rotation du moteur de régulation, devant l'effort de la roue du système à roue et vis sans fin. Il en résulte qu'une augmentation de la vitesse du moteur de régulation implique une hausse du couple délivré aux roues motrices, par le moteur de puissance.

Selon un mode de réalisation, la vis sans fin et la roue du système à roue et vis sans fin comprennent de l'acier. Par exemple, les surfaces de contact entre la roue et la vis sans fin du système à roue et vis sans fin sont en acier graissé.

Ainsi et de manière avantageuse, l'effort induit sur la vis sans fin est compensé par l'effort de frottement dynamique entre la vis sans fin et la roue, car le coefficient de frottement de l'acier sur l'acier est sensiblement égal au sinus de l'angle de filet.

Le but de l'invention est également atteint grâce à la mise en œuvre d'un procédé de pilotage d'un véhicule à motorisation électrique, pour piloter un véhicule à motorisation électrique selon l'un des modes de réalisation décrits précédemment, le procédé de pilotage étant mis en œuvre par l'unité de commande et comprenant:
- une phase de réception de consigne par l'unité de commande, dans laquelle une consigne dépendante de l'actionnement de la pédale d'accélérateur du véhicule à motorisation électrique est reçue, ladite consigne étant représentative d'une valeur absolue d'un enfoncement de la pédale d'accélérateur ;
- dans le cas où la valeur absolue de l'enfoncement de la pédale d'accélérateur est strictement supérieure à une valeur absolue d'enfoncement seuil, mise en œuvre d'une phase de régulation comprenant une étape de mise en rotation du moteur de régulation de sorte à ajuster, en fonction de la vitesse de rotation du moteur de régulation, le taux de réduction du réducteur principal, pour moduler la vitesse de rotation du moteur de puissance afin d'ajuster la valeur du couple mécanique transmis par le mécanisme de transmission de puissance aux roues motrices, un sens de rotation du moteur de régulation entrainant alors en rotation la vis sans fin du système à roue et vis sans fin dans un sens permettant à ladite vis sans fin de s'effacer devant un effort mécanique de la roue sur la vis sans fin ;
- dans tous les autres cas, mise en œuvre d'une phase de modulation de vitesse, dans laquelle une valeur du courant fournie par le moteur de puissance est modulée proportionnellement à valeur absolue de l'enfoncement de la pédale d'accélérateur, de sorte à moduler le couple transmis par le moteur de puissance aux roues motrices.

Les dispositions précédemment décrites permettent de proposer un procédé de pilotage d'un véhicule à motorisation électrique dans lequel une phase de régulation est mise en œuvre pour ajuster la transmission d'un couple mécanique aux roues motrices du véhicule en fonction de la valeur absolue d'enfoncement de la pédale d'accélérateur. En effet, l'augmentation de la vitesse de rotation du moteur de régulation, implique une hausse du couple délivré aux roues motrices, par le moteur de puissance.

Le procédé de pilotage peut en outre présenter une ou plusieurs des caractéristiques suivantes, prises seules ou en combinaison.

Selon un mode de réalisation, la valeur absolue d'enfoncement seuil est égale à 50% d'une course totale d'enfoncement de la pédale d'accélérateur.

Selon un mode de réalisation, la phase de modulation est mise en œuvre de sorte que la valeur de courant fournie par le moteur de puissance soit modulée proportionnellement à la valeur absolue de l'enfoncement de la pédale d'accélérateur entre une valeur de courant nulle et une valeur de courant nominal maximum correspondant à une valeur maximale susceptible d'être fournie par le moteur de puissance.

Il est donc bien compris que lorsque la valeur absolue de l'enfoncement de la pédale d'accélération est comprise entre 0% et la valeur absolue d'enfoncement seuil, le couple fourni par le moteur de puissance est modulé en fonction de la valeur absolue de l'enfoncement de la pédale d'accélération entre un couple nul et une valeur nominale du couple du moteur de puissance.

Selon un mode de réalisation, lors de la phase de régulation, le moteur de puissance fournit un courant dont la valeur est égale à la valeur de courant nominal maximum.

Il est donc bien compris que lorsque la valeur absolue de l'enfoncement de la pédale d'accélération est strictement supérieure à la valeur absolue d'enfoncement seuil, le couple fourni par le moteur de puissance est égal à la valeur nominale du couple du moteur de puissance, et la vitesse de rotation du moteur de régulation est modulée entre 0 et une valeur de vitesse de rotation nominale du moteur de régulation. Par exemple, la valeur de vitesse de rotation nominale du moteur de régulation est égale à 6000 tr/min.

Ainsi, la rotation du moteur de régulation permet d'induire une augmentation du couple transmis par le moteur de puissance aux roues motrices, par l'intermédiaire du réducteur principal.

Selon un mode de réalisation, la roue du système à roue et vis sans fin limite la rotation du porte-satellites à une vitesse dépendant de la vitesse de rotation du moteur de régulation.

Selon un mode de réalisation, les lois de commandes stockées dans la mémoire de l'unité de commande comprennent tout ou partie des étapes du procédé de pilotage tel que décrit précédemment.

### Description sommaire des dessins

D'autres aspects, buts, avantages et caractéristiques de l'invention apparaîtront mieux à la lecture de la description détaillée suivante de modes de réalisation préférés de celle-ci, donnée à titre d'exemple non limitatif, et faite en référence aux dessins annexés sur lesquels :
[Fig. 1] La figure 1 est une vue schématique du véhicule à motorisation électrique selon un premier mode de réalisation.
[Fig. 2] La figure 2 est une vue schématique du véhicule à motorisation électrique selon un deuxième mode de réalisation.
[Fig. 3] La figure 3 est une vue schématique du mécanisme de régulation selon un mode de réalisation.
[Fig. 4] La figure 4 est une vue schématique du procédé de pilotage selon un mode de réalisation.
[Fig. 5] La figure 5 est une vue schématique de l'évolution du couple fourni aux roues motrices en fonction de la vitesse de rotation du moteur de puissance d'un véhicule à motorisation électrique de l'état de la technique.
[Fig. 6] La figure 6 est une vue schématique de certaines étapes du procédé de pilotage selon un mode de réalisation.
[Fig. 7] La figure 7 est une vue schématique de certaines étapes du procédé de pilotage selon un mode de réalisation.

### Description détaillée

Sur les figures et dans la suite de la description, les mêmes références représentent les éléments identiques ou similaires. De plus, les différents éléments ne sont pas représentés à l'échelle de manière à privilégier la clarté des figures. Par ailleurs, les différents modes de réalisation et variantes ne sont pas exclusifs les uns des autres et peuvent être combinés entre eux.

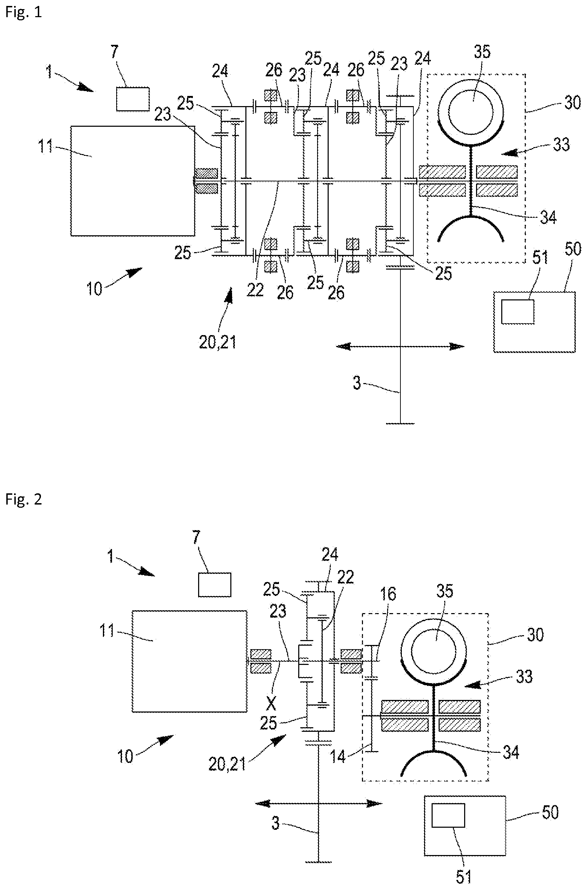

Comme cela est illustré sur les figures 1 et 2, l'invention concerne un véhicule à motorisation électrique 1, comprenant notamment des roues motrices 3, et un groupe motopropulseur 10 incluant au moins un moteur de puissance 11 électrique. De manière générale, un tel véhicule à motorisation électrique 1 comprend au moins un système de stockage d'énergie électrique 7 comme une batterie, qui est configuré pour alimenter en énergie électrique le moteur de puissance 11. Le moteur de puissance 11 est configuré pour entraîner les roues motrices 3 en rotation, afin de permettre l'avancée du véhicule à motorisation électrique 1.

Pour cela, le véhicule à motorisation électrique comprend un mécanisme de transmission de puissance 20 interposé entre ledit moteur de puissance 11 et les roues motrices 3. Ce mécanisme de transmission de puissance 20 comprend un réducteur principal 21 interposé entre le moteur de puissance 11 et les roues motrices 3. Selon les modes de réalisation représentés sur les figures 1 et 2, le réducteur principal 21 du mécanisme de transmission de puissance 20 présente une architecture de train épicycloïdal à au moins un étage, où chaque étape comprend :
- un porte-satellites 22 ;
- un arbre planétaire central 23 centré autour d'un axe de rotation de réduction X ;
- un arbre planétaire périphérique 24 entourant extérieurement l'arbre planétaire central 23, et étant coaxial à l'arbre planétaire central 23 autour de l'axe de rotation de réduction X ;
- au moins un engrenage satellite 25, disposé entre l'arbre planétaire central 23 et l'arbre planétaire périphérique 24, s'engrenant avec l'arbre planétaire central 23 et l'arbre planétaire périphérique 24, et étant configuré pour tourner autour de l'axe de rotation de réduction X.

Certains véhicules à motorisation électrique 1 de l'état de la technique proposent un réducteur principal ayant un taux de réduction de 1/10. Cela est avantageux pour des situations où une forte accélération est demandée, mais dommageable pour un déplacement à vitesse constante à grande vitesse. Ainsi, il peut être prévu que le réducteur principal 21 du véhicule à motorisation électrique 1 présente un taux de réduction global de 0,25 entre une entrée mécaniquement reliée à une sortie du moteur de puissance 11 et une sortie mécaniquement reliée aux roues motrices 3. Selon la variante représentée sur la figure 2, le réducteur principal 21 comprend un seul étage, ledit étage présentant un taux de réduction égal à 0,25. Alternativement, et comme représenté sur la figure 1, le réducteur principal 21 du mécanisme de transmission de puissance 20 peut comprendre au moins deux étages montés en série, et notamment trois étages montés en série. Dans le cas où le réducteur principal 21 comprend plusieurs étages, il peut être prévu que chaque étage présente un taux de réduction choisi de sorte qu'un taux de réduction global du réducteur principal 21 soit compris entre 1/3 et 1/5. Ainsi, si le réducteur principal 21 comprend trois étages montés en série, chaque étage peut avantageusement présenter un taux de réduction de 0,63, de sorte que le réducteur principal 21 présente un taux de réduction global de 0,25. L'articulation des différents étages du réducteur principal peut être mise en œuvre par l'intermédiaire de pignons libres inverseurs 26 disposés entre chaque étage.

Le véhicule à motorisation électrique 1 comprend en outre un mécanisme de régulation 30 distinct du groupe motopropulseur 10, qui comprend un mécanisme réducteur irréversible 33, et un moteur de régulation 31 électrique. Avantageusement, ce moteur de régulation 31 électrique peut être alimenté en énergie électrique par un système de stockage d'énergie électrique 7 identique ou différent de celui qui alimente en énergie électrique le moteur de puissance 11. Le moteur de régulation 31 peut comprendre un arbre de sortie 32 solidaire en rotation d'un élément du mécanisme réducteur irréversible 33.

Le mécanisme réducteur irréversible 33 est interposé entre le moteur de régulation 31 et le mécanisme de transmission de puissance 20, et agit sur le mécanisme de transmission de puissance 20 d'une manière permettant d'ajuster, en fonction de la vitesse de rotation du moteur de régulation 31, le taux de réduction du réducteur principal 21, pour moduler la vitesse de rotation du moteur de puissance 11 afin d'ajuster la valeur du couple mécanique transmis par le mécanisme de transmission de puissance 20 aux roues motrices 3. Le mécanisme réducteur irréversible 33 interdit une transmission d'efforts mécaniques du moteur de régulation 31 vers les roues motrices 3 et interdit une transmission d'efforts mécaniques du mécanisme de transmission de puissance 20 vers le moteur de régulation 31. Ainsi, le mécanisme réducteur irréversible permet une parfaite étanchéité de puissance entre le groupe motopropulseur 10 et le mécanisme de régulation 30.

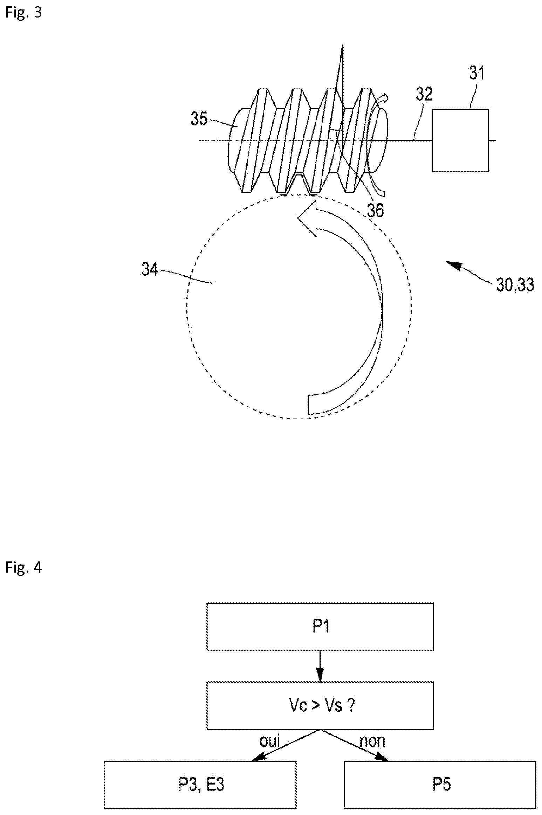

Comme cela est illustré sur les figures 1 et 2, et plus précisément sur la figure 3, le mécanisme réducteur irréversible 33 comprend un système à roue et vis sans fin dont la vis sans fin 35 est couplée en rotation avec l'arbre de sortie 32 du moteur de régulation 31. Par exemple, la vis sans fin 35 du système à roue et vis sans fin est solidaire en rotation de l'arbre de sortie 32 du moteur de régulation 31. De son côté, la roue 34 est couplée en rotation avec un porte-satellites 22 d'un étage du réducteur principal 21. Ainsi, une rotation de la roue 34 entraîne en rotation ledit porte-satellites 22 dans un sens permettant d'augmenter le taux de réduction global du mécanisme de transmission de puissance 20. Pour cela, la roue 34 du système à roue et vis sans fin peut être solidaire en rotation avec le porte-satellites 22 d'un étage de l'au moins un étage du réducteur principal 21. Le système à roue et vis sans fin est configuré de sorte à présenter un taux de réduction compris entre 1/8 et 1/12, et notamment un taux de réduction égal à 1/10.

Le caractère irréversible du système à roue et vis sans fin peut être garanti par le choix des paramètres et des matériaux de la vis sans fin 35, et de la roue 34. Par exemple, la vis sans fin 35 peut comprendre un filet ayant un angle de filet 36 inférieur ou égal à 6°, et notamment sensiblement égal à 6°. De plus, la vis sans fin 35 et la roue 34 du système à roue et vis sans fin peuvent comprendre de l'acier. Plus particulièrement, les surfaces de contact entre la roue 34 et la vis sans fin 35 du système à roue et vis sans fin peuvent être en acier graissé. Ainsi et de manière avantageuse, l'effort induit sur la vis sans fin 35 est compensé par l'effort de frottement dynamique entre la vis sans fin 35 et la roue 34, car le coefficient de frottement de l'acier sur l'acier est sensiblement égal au sinus de l'angle de filet 36. Il en résulte que le système à roue et vis sans fin est réputé irréversible, la rotation de la roue 34 solidaire en rotation du porte-satellites 22 étant dépendante de la rotation de la vis sans fin 35. Il est alors possible que la vis sans fin 35 soit configurée pour s'effacer, à la vitesse de rotation du moteur de régulation 31, devant l'effort de la roue 34 du système à roue et vis sans fin, pour opérer ainsi la régulation en modifiant le taux de réduction du réducteur principal 21. Ainsi, une augmentation de la vitesse du moteur de régulation 31 implique une hausse du couple délivré aux roues motrices 3, par le moteur de puissance 11.

Selon le mode de réalisation représenté sur la figure 2, le véhicule à motorisation électrique 1 comprend un premier engrenage 14 et un deuxième engrenage 16 disposés entre la roue 34 du système à roue et vis sans fin et un porte-satellite 22 de l'un des étages du réducteur principal 21. Les premier et deuxième engrenages 14, 16 sont engrenés l'un avec l'autre, le premier engrenage 14 est en outre engrené avec la roue 34 du système à roue et vis sans fin, et le deuxième engrenage 16 est solidaire en rotation du porte-satellites 22. Par exemple, lesdits premier et deuxième engrenages 14, 16 sont montés en série entre la roue 34 du système à roue et vis sans fin et un porte-satellites 22 de l'un des étages du réducteur. Ce mode de réalisation permet avantageusement de réduire le nombre d'étage du réducteur principal 21, en n'utilisant qu'un seul étage. Par exemple, il peut être prévu que le premier engrenage 14 soit deux ou trois fois plus petit que le deuxième engrenage 16, ou inversement.

Enfin, le véhicule à motorisation électrique 1 comprend une unité de commande 50 électronique assurant un pilotage du moteur de puissance 11 et du moteur de régulation 31 en fonction de lois de commande enregistrées dans une mémoire 51 de l'unité de commande 50 électronique. Ces lois de commande sont au moins dépendantes d'une action sur une pédale d'accélérateur du véhicule à motorisation électrique 1.

Les dispositions précédemment décrites permettent de proposer un véhicule à motorisation électrique 1 dans lequel un mécanisme réducteur irréversible 33 est utilisé pour contrôler le couple du moteur de puissance 11. Le caractère irréversible du mécanisme réducteur irréversible 33 permet d'isoler mécaniquement le moteur de régulation 31 par rapport au groupe motopropulseur 10 afin qu'aucune puissance délivrée par le moteur de puissance 11 ne soit transmise au moteur de régulation 31 et inversement.

L'invention concerne également un procédé de pilotage d'un véhicule à motorisation électrique 1 dont un mode de réalisation est représenté sur les figures 4 à 6. Ce procédé de pilotage permet de piloter un véhicule à motorisation électrique 1 du type d'un de ceux décrits précédemment, et est mis en œuvre par l'unité de commande 50. En particulier, il peut être prévu que les lois de commandes stockées dans la mémoire 51 de l'unité de commande 50 comprennent tout ou partie des étapes du procédé de pilotage décrit ci-après.

Le procédé de pilotage comprend tout d'abord une phase de réception de consigne P1 par l'unité de commande 50, dans laquelle une consigne dépendante de l'actionnement d'une pédale d'accélérateur du véhicule à motorisation électrique 1 est reçue. Cette consigne est représentative d'une valeur absolue d'un enfoncement de la pédale d'accélérateur Vc.

Dans le cas où la valeur absolue de l'enfoncement de la pédale d'accélérateur Vc est strictement supérieure à une valeur absolue d'enfoncement seuil Vs, le procédé de contrôle comprend la mise en œuvre d'une phase de régulation P3 comprenant une étape de mise en rotation E3 du moteur de régulation 31 de sorte à ajuster, en fonction de la vitesse de rotation du moteur de régulation 31, le taux de réduction du réducteur principal 21, pour moduler la vitesse de rotation du moteur de puissance 11 afin d'ajuster la valeur du couple mécanique transmis par le mécanisme de transmission de puissance 20 aux roues motrices 3. Plus particulièrement, si le véhicule à motorisation électrique 1 comprend un mécanisme réducteur irréversible 33 comprenant un système à roue et vis sans fin, lors de la phase de régulation P3, un sens de rotation du moteur de régulation 31 entraine en rotation la vis sans fin 35 du système à roue et vis sans fin dans un sens permettant à ladite vis sans fin 35 de s'effacer devant un effort mécanique de la roue 34 sur la vis sans fin. Il est donc bien compris que la roue 34 du système à roue et vis sans fin limite la rotation du porte-satellites 22 à une vitesse dépendant de la vitesse de rotation Va du moteur de régulation 31. En d'autres termes, le mécanisme réducteur irréversible 33 permet de réduire le taux de réduction du réducteur principal 11 pour mettre en œuvre la phase de régulation P3.

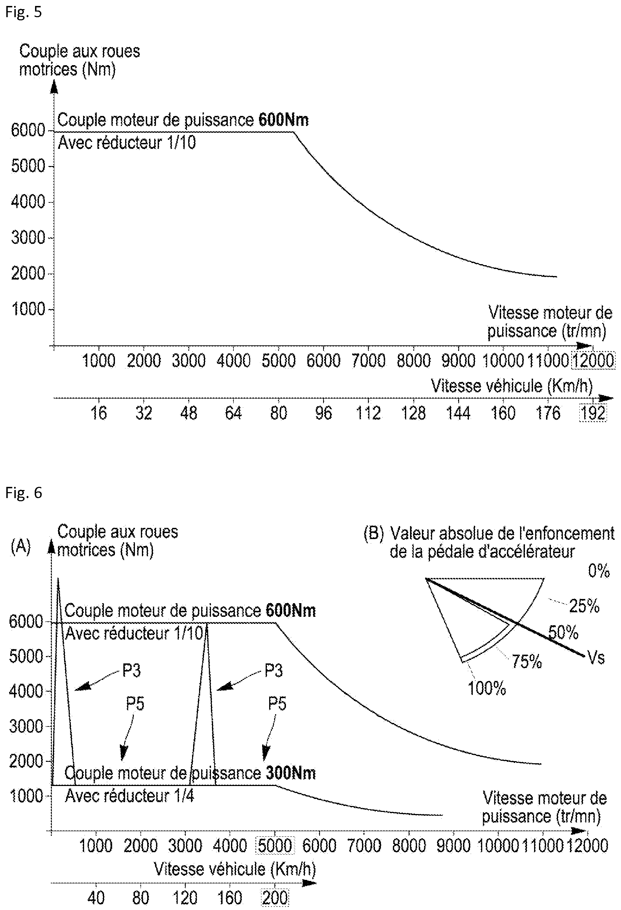

La figure 5 à 7 illustrent une comparaison entre un procédé de pilotage d'un véhicule à motorisation électrique (1) selon l'état de la technique, et un mode de réalisation du procédé de pilotage selon l'invention. La figure 5 illustre notamment l'évolution du couple transmis par le moteur de puissance 11 aux roues motrices 3 par un véhicule à motorisation électrique 1 de l'état de la technique. Ce véhicule à motorisation électrique 11 de l'état de la technique peut par exemple présenter un réducteur principal 21 ayant un taux de réduction de 1/10. De manière avantageuse, un tel système permet d'augmenter la vitesse du véhicule à motorisation électrique 1 proportionnellement à la vitesse de rotation du moteur de puissance 11 jusqu'à environ 85 km/h. Cependant, au-delà de cette vitesse, le couple transmis aux roues motrices 3 diminue, conduisant à une forte consommation électrique du moteur de puissance 11.

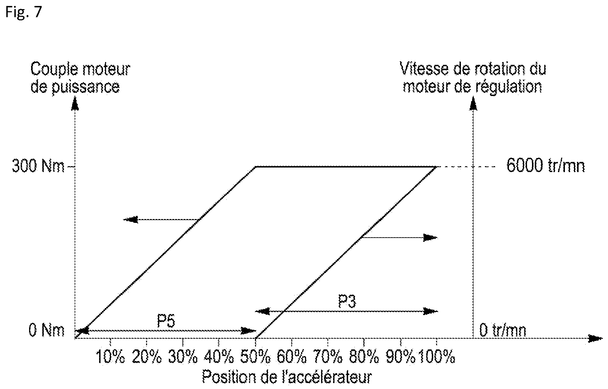

Un mode de réalisation du procédé de pilotage selon l'invention est représenté sur les figures 6 et 7. Notamment la figure 6 B illustre la course d'enfoncement de la pédale d'accélérateur entre 0% de la course totale d'enfoncement de la pédale d'accélérateur, et 100% de ladite course totale d'enfoncement de la pédale d'accélérateur. Selon ce mode de réalisation la valeur absolue d'enfoncement seuil Vs est égale à 50% de la course totale d'enfoncement de la pédale d'accélérateur. Par conséquent, lorsque la valeur absolue de l'enfoncement de la pédale d'accélérateur Vc est strictement supérieure à 50%, la phase de régulation P3 est mise en œuvre, conduisant à une augmentation du couple transmis au roues motrices 3, comme illustré sur les figure 6 A, et 7. De manière avantageuse, lors la phase de régulation P3, le moteur de puissance 11 fournit un courant dont la valeur est égale à une valeur de courant nominal maximum correspondant à une valeur maximale de courant susceptible d'être fournie par le moteur de puissance 11. Il est donc bien compris que lorsque la valeur absolue de l'enfoncement de la pédale d'accélération Vc est strictement supérieure à la valeur absolue d'enfoncement seuil Vs, le couple fourni par le moteur de puissance 11 est égal à la valeur nominale du couple du moteur de puissance, et la vitesse de rotation du moteur de régulation 31 est modulée entre 0 et une valeur de vitesse de rotation nominale du moteur de régulation. Par exemple, la valeur de vitesse de rotation nominale du moteur de régulation est égale à 6000 tr/min.

Dans tous les autres cas, le procédé de pilotage comprend la mise en œuvre d'une phase de modulation P5 de vitesse, dans laquelle une valeur du courant fournie par le moteur de puissance 11 est modulée proportionnellement à la valeur absolue de l'enfoncement de la pédale d'accélérateur Vc, de sorte à moduler le couple transmis par le moteur de puissance 11 aux roues motrices 3. Il est donc bien compris que lorsque la valeur absolue de l'enfoncement de la pédale d'accélération Vc est comprise entre 0% et la valeur absolue d'enfoncement seuil Vs, le couple fourni par le moteur de puissance 11 est modulé en fonction de la valeur absolue de l'enfoncement de la pédale d'accélération Vc entre un couple nul et une valeur nominale du couple du moteur de puissance. Ainsi, la rotation du moteur de régulation 31 permet d'induire une augmentation du couple transmis par le moteur de puissance 11 aux roues motrices 3, par l'intermédiaire du réducteur principal 21.

Par exemple la phase de modulation P5 est mise en œuvre de sorte que la valeur de courant fournie par le moteur de puissance 11 soit modulée proportionnellement à la valeur absolue de l'enfoncement de la pédale d'accélérateur Vc entre une valeur de courant nulle et la valeur de courant nominal maximum.

Les dispositions précédemment décrites permettent de proposer un procédé de pilotage d'un véhicule à motorisation électrique 1 dans lequel une phase de régulation P3 est mise en œuvre pour ajuster la transmission d'un couple mécanique aux roues motrices 3 du véhicule en fonction de la valeur absolue d'enfoncement de la pédale d'accélérateur Vc. En effet, l'augmentation de la vitesse de rotation du moteur de régulation 31, implique une hausse du couple délivré aux roues motrices 3, par le moteur de puissance 11.

## Revendications

1. Véhicule à motorisation électrique (1), comprenant :
- des roues motrices (3) ;
- un groupe motopropulseur (10) incluant au moins un moteur de puissance (11) électrique et un mécanisme de transmission de puissance (20) entre ledit moteur de puissance (11) et les roues motrices (3), le mécanisme de transmission de puissance (20) comprenant un réducteur principal (21) interposé entre le moteur de puissance (11) et les roues motrices (3), ledit réducteur principal (21) présentant une architecture de train épicycloïdal à au moins un étage, où chaque étage comprend :
• un porte-satellites (22) ;
• un arbre planétaire central (23) centré autour d'un axe de rotation de réduction (X) ;
• un arbre planétaire périphérique (24) entourant extérieurement l'arbre planétaire central (23), et étant coaxial à l'arbre planétaire central (23) autour de l'axe de rotation de réduction (X) ;
• au moins un engrenage satellite (25), disposé entre l'arbre planétaire central (23) et l'arbre planétaire périphérique (24), s'engrenant avec l'arbre planétaire central (23) et l'arbre planétaire périphérique (24), et étant configuré pour tourner autour de l'axe de rotation de réduction (X);
- une pédale d'accélérateur ;
- un mécanisme de régulation (30) distinct du groupe motopropulseur (10), le mécanisme de régulation (30) comprenant :
• un moteur de régulation (31) électrique;
• un mécanisme réducteur irréversible (33) interposé entre le moteur de régulation (31) et le mécanisme de transmission de puissance (20), et agissant sur le mécanisme de transmission de puissance (20) d'une manière permettant d'ajuster, en fonction de la vitesse de rotation du moteur de régulation (31), le taux de réduction du réducteur principal (21), pour moduler une vitesse de rotation du moteur de puissance (11) afin d'ajuster la valeur du couple mécanique transmis par le mécanisme de transmission de puissance (20) aux roues motrices (3), le mécanisme réducteur irréversible (33) interdisant une transmission d'efforts mécaniques du moteur de régulation (31) vers les roues motrices (3) et interdisant une transmission d'efforts mécaniques du mécanisme de transmission de puissance (20) vers le moteur de régulation (31), ledit mécanisme réducteur irréversible (33) étant un système à roue et vis sans fin dont la vis sans fin (35) est couplée en rotation avec un arbre de sortie (32) du moteur de régulation (31) et dont la roue (34) est couplée en rotation avec le porte-satellites (22) d'un étage dudit au moins un étage du réducteur principal (21), une rotation de la roue (34) entraînant en rotation ledit porte-satellites (22) dans un sens permettant d'augmenter le taux de réduction global du mécanisme de transmission de puissance (20) ;
- une unité de commande (50) électronique assurant un pilotage du moteur de puissance (11) et du moteur de régulation (31) en fonction de lois de commande enregistrées dans une mémoire (51) de l'unité de commande (50) électronique, lesdites lois de commande étant au moins dépendantes d'une action sur la pédale d'accélérateur du véhicule à motorisation électrique (1).

2. Véhicule à motorisation électrique (1) selon la revendication 1, comprenant au moins un système de stockage d'énergie électrique (7) configuré pour alimenter en énergie électrique au moins un moteur électrique choisi parmi le moteur de puissance (11) du groupe motopropulseur (10) et le moteur de régulation (31).

3. Véhicule à motorisation électrique (1) selon l'une quelconque des revendications 1 ou 2, dans lequel le réducteur principal (21) du mécanisme de transmission de puissance (20) comprend au moins deux étages montés en série.

4. Véhicule à motorisation électrique (1) selon l'une quelconque des revendications 1 à 3, dans lequel chaque étage présente un taux de réduction, ledit taux de réduction de chaque étage étant choisi de sorte qu'un taux de réduction global du réducteur principal (21) soit compris entre 1/3 et 1/5.

5. Véhicule à motorisation électrique (1) selon l'une quelconque des revendications 1 à 4, comprenant un premier engrenage (14) et un deuxième engrenage (16) disposés entre la roue (34) du système à roue et vis sans fin et le porte-satellite (22) de l'un des étages du réducteur principal (21), lesdits premier et deuxième engrenages (14, 16) étant engrenés l'un avec l'autre, le premier engrenage (14) étant en outre engrené avec la roue (34) du système à roue et vis sans fin, et le deuxième engrenage (16) étant solidaire en rotation du porte-satellites (22).

6. Véhicule à motorisation électrique (1) selon l'une quelconque des revendications 1 à 5, dans lequel le système à roue et vis sans fin est configuré de sorte à présenter un taux de réduction compris entre 1/8 et 1/12.

7. Véhicule à motorisation électrique (1) selon l'une quelconque des revendications 1 à 6, dans lequel la vis sans fin (35) comprend un filet ayant un angle de filet (36) inférieur ou égal à 6°, et notamment sensiblement égal à 6°.

8. Procédé de pilotage d'un véhicule à motorisation électrique (1), pour piloter un véhicule à motorisation électrique (1) selon l'une quelconque des revendications 1 à 7, le procédé de pilotage étant mis en œuvre par l'unité de commande (50) et comprenant:
- une phase de réception de consigne (P1) par l'unité de commande (50), dans laquelle une consigne dépendante de l'actionnement de la pédale d'accélérateur du véhicule à motorisation électrique (1) est reçue, ladite consigne étant représentative d'une valeur absolue d'un enfoncement de la pédale d'accélérateur (Vc) ;
- dans le cas où la valeur absolue de l'enfoncement de la pédale d'accélérateur (Vc) est strictement supérieure à une valeur absolue d'enfoncement seuil (Vs), mise en œuvre d'une phase de régulation (P3) comprenant une étape de mise en rotation (E3) du moteur de régulation (31) de sorte à ajuster, en fonction de la vitesse de rotation du moteur de régulation (31), le taux de réduction du réducteur principal, pour moduler la vitesse de rotation du moteur de puissance afin d'ajuster la valeur du couple mécanique transmis par le mécanisme de transmission de puissance (20) aux roues motrices (3), un sens de rotation du moteur de régulation (31) entrainant alors en rotation la vis sans fin (35) du système à roue et vis sans fin dans un sens permettant à ladite vis sans fin (35) de s'effacer devant un effort mécanique de la roue (34) sur la vis sans fin (35) ;
- dans tous les autres cas, mise en œuvre d'une phase de modulation (P5) de vitesse de rotation du moteur de puissance (20), dans laquelle une valeur du courant fournie par le moteur de puissance (11) est modulée proportionnellement à la valeur absolue de l'enfoncement de la pédale d'accélérateur (Vc), de sorte à moduler le couple transmis par le moteur de puissance (11) aux roues motrices (3).

9. Procédé de pilotage selon la revendication 8, dans lequel la valeur absolue d'enfoncement seuil (Vs) est égale à 50% d'une course totale d'enfoncement de la pédale d'accélérateur.

10. Procédé de pilotage selon l'une quelconque des revendications 8 ou 9, dans lequel la phase de modulation (P5) est mise en œuvre de sorte que la valeur de courant fournie par le moteur de puissance (11) soit modulée proportionnellement à la valeur absolue de l'enfoncement de la pédale d'accélérateur (Vc) entre une valeur de courant nulle et une valeur de courant nominal maximum correspondant à une valeur maximale susceptible d'être fournie par le moteur de puissance (11).

11. Procédé de pilotage selon la revendication 10, dans lequel lors de la phase de régulation, le moteur de puissance (11) fournit un courant dont la valeur est égale à la valeur de courant nominal maximum.

## Patentansprüche

1. Elektrisch angetriebenes Fahrzeug (1), umfassend:
- Antriebsräder (3);
- eine Antriebseinheit (10), die mindestens einen elektrischen Leistungsmotor (11) und einen Kraftübertragungsmechanismus (20) zwischen dem Leistungsmotor (11) und den Antriebsrädern (3) enthält, wobei der Kraftübertragungsmechanismus (20) ein Hauptgetriebe (21) umfasst, das zwischen dem Leistungsmotor (11) und den Antriebsrädern (3) angeordnet ist, wobei das Hauptgetriebe (21) eine Architektur eines mindestens einstufigen Planetengetriebes aufweist, wobei jede Stufe Folgendes umfasst:
• einen Planetenradträger (22);
• eine zentrale Planetenwelle (23), die um eine Reduktionsdrehachse (X) zentriert ist;
• eine umlaufende Planetenwelle (24), die die zentrale Planetenwelle (23) außen umgibt und koaxial zu der zentralen Planetenwelle (23) um die Reduktionsdrehachse (X) verläuft;
• mindestens ein Planetenrad (25), das zwischen der zentralen Planetenwelle (23) und der umlaufenden Planetenwelle (24) angeordnet ist, in die zentrale Planetenwelle (23) und die umlaufende Planetenwelle (24) eingreift und so eingerichtet ist, dass es sich um die Reduktionsdrehachse (X) dreht;
- ein Gaspedal;
- einen von der Antriebseinheit (10) getrennten Regelmechanismus (30), wobei der Regelmechanismus (30) Folgendes umfasst:
• einen elektrischen Verstellmotor (31);
• einen irreversiblen Untersetzungsmechanismus (33), der zwischen dem Verstellmotor (31) und dem Kraftübertragungsmechanismus (20) angeordnet ist und auf den Kraftübertragungsmechanismus (20) wirkt, so dass in Abhängigkeit von der Drehzahl des Verstellmotors (31) die Untersetzungsrate des Hauptgetriebes (21) angepasst werden kann, um eine Drehzahl des Kraftmotors (11) zu modulieren, um den Wert des von dem Kraftübertragungsmechanismus (20) auf die Antriebsräder (3) übertragenen mechanischen Drehmoments anzupassen, wobei der irreversible Untersetzungsmechanismus (33) eine Übertragung mechanischer Kräfte von dem Verstellmotor (31) auf die Antriebsräder (3) und eine Übertragung mechanischer Kräfte von dem Kraftübertragungsmechanismus (20) auf den Verstellmotor (31) verhindert, wobei der irreversible Untersetzungsmechanismus (33) ein Schneckenradsystem ist, dessen Schnecke (35) mit einer Abtriebswelle (32) des Verstellmotors (31) drehgekoppelt ist und dessen Rad (34) mit dem Planetenradträger (22) einer Stufe des mindestens einen Hauptgetriebes (21) drehgekoppelt ist, wobei eine Drehung des Rads (34) den Planetenradträger (22) in einer Richtung in Drehung antreibt, die das Erhöhen der Gesamtreduktionsrate des Kraftübertragungsmechanismus (20) ermöglicht;
- eine elektronische Steuereinheit (50), die eine Steuerung des Leistungsmotors (11) und des Verstellmotors (31) in Abhängigkeit von in einem Speicher (51) der elektronischen Steuereinheit (50) gespeicherten Steuerregelungen sicherstellt, wobei die Steuerregelungen mindestens von einer Betätigung des Gaspedals des elektrisch angetriebenen Fahrzeugs (1) abhängig sind.

2. Elektrisch angetriebenes Fahrzeug (1) nach Anspruch 1, umfassend mindestens ein elektrisches Energiespeichersystem (7), das so eingerichtet ist, dass es mindestens einen Elektromotor mit elektrischer Energie versorgt, der aus dem Leistungsmotor (11) der Antriebseinheit (10) und dem Verstellmotor (31) ausgewählt ist.

3. Elektrisch angetriebenes Fahrzeug (1) nach einem der Ansprüche 1 oder 2, wobei das Hauptgetriebe (21) des Kraftübertragungsmechanismus (20) mindestens zwei in Reihe geschaltete Stufen umfasst.

4. Elektrisch angetriebenes Fahrzeug (1) nach einem der Ansprüche 1 bis 3, wobei jede Stufe eine Untersetzungsrate aufweist, wobei die Untersetzungsrate jeder Stufe so gewählt ist, dass eine Gesamtuntersetzungsrate des Hauptgetriebes (21) zwischen 1/3 und 1/5 liegt.

5. Elektrisch angetriebenes Fahrzeug (1) nach einem der Ansprüche 1 bis 4, umfassend ein erstes Zahnrad (14) und ein zweites Zahnrad (16), die zwischen dem Rad (34) des Schneckenradsystems und dem Planetenträger (22) einer der Stufen des Hauptgetriebes (21) angeordnet sind, wobei das erste und das zweite Zahnrad (14, 16) ineinander greifen, wobei das erste Zahnrad (14) ferner mit dem Rad (34) des Schneckenradsystems in Eingriff steht, und das zweite Zahnrad (16) drehfest mit dem Planetenradträger (22) verbunden ist.

6. Elektrisch angetriebenes Fahrzeug (1) nach einem der Ansprüche 1 bis 5, wobei das Schneckenradsystem so eingerichtet ist, dass es eine Reduktionsrate zwischen 1/8 und 1/12 aufweist.

7. Elektrisch angetriebenes Fahrzeug (1) nach einem der Ansprüche 1 bis 6, wobei die Schnecke (35) ein Gewinde mit einem Gewindewinkel (36) kleiner oder gleich 6°, und insbesondere im Wesentlichen gleich 6°, umfasst.

8. Verfahren zur Steuerung eines elektrisch angetriebenen Fahrzeugs (1), um ein elektrisch angetriebenes Fahrzeug (1) nach einem der Ansprüche 1 bis 7 zu steuern, wobei das Steuerungsverfahren von der Steuereinheit (50) durchgeführt wird und Folgendes umfasst:
- eine Sollwertempfangsphase (P1) durch die Steuereinheit (50), in der ein von der Betätigung des Gaspedals des elektrisch angetriebenen Fahrzeugs (1) abhängiger Sollwert empfangen wird, wobei der Sollwert für einen absoluten Wert eines Niederdrückens des Gaspedals (Vc) repräsentativ ist;
- für den Fall, dass der absolute Wert des Niederdrückens des Gaspedals (Vc) strikt über einem absoluten Schwellenert des Niederdrückens (Vs) liegt, Durchführen einer Regelphase (P3), die eine Drehstufe (E3) des Verstellmotors (31) umfasst, um in Abhängigkeit von der Drehzahl des Verstellmotors (31) die Reduzierungsrate des Hauptgetriebes anzupassen, um die Drehzahl des Leistungsmotors zu modulieren, um den Wert des von dem Kraftübertragungsmechanismus (20) auf die Antriebsräder (3) übertragenen mechanischen Drehmoments anzupassen, wobei eine Drehrichtung des Verstellmotors (31) dann die Schnecke (35) des Schneckenradsystems in einer Richtung in Drehung antreibt, die es der Schnecke (35) ermöglicht, sich vor einer mechanischen Kraft des Rades (34) auf die Schnecke (35) zurückzuziehen;
- für alle anderen Fälle, Durchführen einer Phase zur Modulation (P5) der Drehzahl des Leistungsmotors (20), wobei ein von dem Leistungsmotor (11) gelieferter Stromwert proportional zu dem absoluten Wert des Niederdrückens des Gaspedals (Vc) moduliert wird, so dass das von dem Leistungsmotor (11) auf die Antriebsräder (3) übertragene Drehmoment moduliert wird.

9. Steuerungsverfahren nach Anspruch 8, wobei der absolute Schwellenwert des Niederdrückens (Vs) gleich 50 % eines gesamten Wegs des Niederdrückens des Gaspedals ist.

10. Steuerungsverfahren nach einem der Ansprüche 8 oder 9, wobei die Modulationsphase (P5) so durchgeführt wird, dass der von dem Leistungsmotor (11) bereitgestellte Stromwert proportional zu dem absoluten Wert des Niederdrückens des Gaspedals (Vc) zwischen einem Nullstromwert und einem maximalen Nennstromwert moduliert wird, der einem maximalen Wert entspricht, der von dem Leistungsmotor (11) geliefert werden kann.

11. Steuerungsverfahren nach Anspruch 10, wobei der Leistungsmotor (11) in der Regelphase einen Strom liefert, dessen Wert gleich dem maximalen Nennstromwert ist.

## Claims

1. An electrically powered vehicle (1), comprising:
- drive wheels (3);
- a powertrain (10) including at least one electric power motor (11) and a power transmission mechanism (20) between said power motor (11) and the drive wheels (3), the power transmission mechanism (20) comprising a main reducer (21) interposed between the power motor (11) and the drive wheels (3), said main reducer (21) having an epicyclic gear architecture with at least one stage, wherein each stage comprises:
• a planet carrier (22);
• a central planetary shaft (23) centered about a reduction rotation axis (X);
• a peripheral planetary shaft (24) externally surrounding the central planetary shaft (23), and being coaxial with the central planetary shaft (23) about the reduction rotation axis (X);
• at least one planet gear (25), arranged between the central planetary shaft (23) and the peripheral planetary shaft (24), meshing with the central planetary shaft (23) and the peripheral planetary shaft (24), and being configured to rotate about the reduction rotation axis (X);
- an accelerator pedal;
- a regulating mechanism (30) separate from the powertrain (10), the regulating mechanism (30) comprising:
• an electric regulating motor (31);
• an irreversible reducer mechanism (33) interposed between the regulating motor (31) and the power transmission mechanism (20), and acting on the power transmission mechanism (20) in such a way as to adjust, as a function of the rotational speed of the regulating motor (31), the reduction ratio of the main reducer (21), to modulate a rotational speed of the power motor (11) in order to adjust the value of the mechanical torque transmitted by the power transmission mechanism (20) to the drive wheels (3), the irreversible reducer mechanism (33) preventing transmission of mechanical forces from the regulating motor (31) to the drive wheels (3) and preventing transmission of mechanical forces from the power transmission mechanism (20) to the regulating motor (31), said irreversible reducer mechanism (33) being a wheel-and-worm system, the worm (35) of which is coupled in rotation with an output shaft (32) of the regulating motor (31), and the wheel (34) of which is coupled in rotation with the planet carrier (22) of one stage of said at least one stage of the main reducer (21), a rotation of the wheel (34) causing said planet carrier (22) to rotate in a direction allowing the overall reduction ratio of the power transmission mechanism (20) to be increased;
- an electronic control unit (50) ensuring driving of the power motor (11) and the regulating motor (31) according to control laws stored in a memory (51) of the electronic control unit (50), said control laws being at least dependent on an action on the accelerator pedal of the electrically powered vehicle (1).

2. The electrically powered vehicle (1) according to claim 1, comprising at least one electrical energy storage system (7) configured to supply electrical energy to at least one electric motor selected from the power motor (11) of the powertrain (10) and the regulating motor (31).

3. The electrically powered vehicle (1) according to any one of claims 1 or 2, wherein the main reducer (21) of the power transmission mechanism (20) comprises at least two stages connected in series.

4. The electrically powered vehicle (1) according to any one of claims 1 to 3, wherein each stage has a reduction ratio, said reduction ratio of each stage being chosen so that an overall reduction ratio of the main reducer (21) is between 1/3 and 1/5.

5. The electrically powered vehicle (1) according to any one of claims 1 to 4, comprising a first gear (14) and a second gear (16) arranged between the wheel (34) of the worm-and-wheel system and the planet carrier (22) of one of the stages of the main reducer (21), said first and second gears (14, 16) being meshed with each other, the first gear (14) being further meshed with the wheel (34) of the worm-and-wheel system, and the second gear (16) being secured in rotation to the planet carrier (22).

6. The electrically powered vehicle (1) according to any one of claims 1 to 5, wherein the worm-and-wheel system is configured to have a reduction ratio of between 1/8 and 1/12.

7. The electrically powered vehicle (1) according to any one of claims 1 to 6, wherein the worm (35) comprises a thread having a thread angle (36) less than or equal to 6°, and in particular substantially equal to 6°.

8. An electrically powered vehicle (1) drive method for driving an electrically powered vehicle (1) according to any one of claims 1 to 7, the drive method being implemented by the control unit (50) and comprising:
- a setpoint reception phase (P1) by the control unit (50), wherein a setpoint dependent on the actuation of the accelerator pedal of the electrically powered vehicle (1) is received, said setpoint being representative of an absolute value of an accelerator pedal depression (Vc);
- in the event that the absolute value of the accelerator pedal depression (Vc) is strictly greater than a threshold depression absolute value (Vs), implementation of a regulation phase (P3) comprising a step of rotating (E3) the regulating motor (31) so as to adjust, as a function of the rotational speed of the regulating motor (31), the reduction ratio of the main reducer, to modulate the rotational speed of the power motor in order to adjust the value of the mechanical torque transmitted by the power transmission mechanism (20) to the drive wheels (3), a rotation direction of the regulating motor (31) then causing the worm (35) of the worm-and-wheel system to rotate in a direction enabling said worm (35) to yield to a mechanical force of the wheel (34) on the worm (35);
- in all other cases, implementation of a power motor (20) rotation speed modulation phase (P5), wherein a value of the current provided by the power motor (11) is modulated proportionally to the absolute value of the accelerator pedal depression (Vc), so as to modulate the torque transmitted by the power motor (11) to the drive wheels (3).

9. The drive method according to claim 8, wherein the threshold depression absolute value (Vs) is equal to 50% of a total accelerator pedal depression stroke.

10. The drive method according to any one of claims 8 or 9, wherein the modulation phase (P5) is implemented so that the current value provided by the power motor (11) is modulated proportionally to the absolute value of the accelerator pedal depression (Vc) between a zero current value and a maximum rated current value corresponding to a maximum value capable of being provided by the power motor (11).

11. The drive method according to claim 10, wherein, during the regulation phase, the power motor (11) provides a current the value of which is equal to the maximum rated current value.
